# EUROPEAN PATENT APPLICATION

(11) **EP 4 339 856 A1**
(43) Date of publication of application: **20.03.2024**
(21) Application number: 23184399.6
(22) Date of filing: 10.07.2023
(51) Int. Cl.: G06Q 10/06

(54) **SYSTEMS AND METHODS FOR DYNAMICALLY UPDATING MACHINE-READABLE INDICIA FOR INDUSTRIAL AUTOMATION COMPONENTS**

(30) Priority: 15.09.2022 US 202217945740
(71) Applicant: Rockwell Automation Technologies, Inc., Mayfield Heights, OH 44124 (US)
(72) Inventor: Marques, Roberto S., Mayfield Heights, OH, (US); Coon, Ryan, Mayfield Heights, OH (US); Chis, Marius G., Mayfield Heights, OH (US)
(74) Representative: Grünecker Patent- und Rechtsanwälte PartG mbB

(57) **Abstract**

An industrial automation component includes an electronic display that displays machine-readable indicia. The machine readable-indicia may be scanned by an image sensor. The industrial automation component also includes a processor communicatively coupled to the electronic display. The processor receives data associated with the industrial automation component and generates a first machine-readable indicia based on the data. The first machine-readable indicia may be displayed via the electronic display. The processor also receives updated data associated with the industrial automation component and generates a second machine-readable indicia based on the updated data. The second machine-readable indicia may be displayed via the electronic display.

## Description

### BACKGROUND

The disclosure generally relates to machine-readable indicia that may be utilized to retrieve data for industrial automation components. More particularly, embodiments of the present disclosure are related to systems and methods for dynamically updating machine-readable indicia to be displayed on displays of industrial automation components based on operations, software updates, maintenance, and the like.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Industrial automation systems and many different types of equipment in industrial settings may generate data from devices and sensors, may connect to other devices in the industrial automation systems, and may receive updates and maintenance actions. As more data associated with the industrial automation systems becomes available, improved techniques for data analysis and data retrieval may be beneficial to enable technicians to better understand operations of the industrial automations systems. Accordingly, it may be desirable for improved systems and methods for dynamically generating and updating machine-readable indicia for industrial automation components within an industrial automation system to provide accurate and up-to-date information about components of industrial automation systems, for example, for technicians to utilize.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In one embodiment, an industrial automation component includes an electronic display that presents image data and a processor communicatively coupled to the electronic display. The processor receives image data associated with a secondary device and determines a device identifier associated with the secondary device based on the image data. The processor also identifies authentication data based on a comparison between the device identifier and a stored list of device identifiers. The authentication data includes access credentials associated with the industrial automation component. The processor also generates first image data based on the authentication data and presents the first image data via the electronic display, wherein the first image data comprises a first machine-readable indicia.

In another embodiment, a method includes receiving connection data associated with an industrial automation component. In the embodiment, the connection data includes a list of devices coupled to the industrial automation component. The method also includes generating first image data based on the connection data. The first image data includes a first machine-readable indicia having the connection data embedded therein. The method also includes receiving updated connection data. The updated connection data includes an updated list of devices coupled to the industrial automation component. The updated list of devices includes at least one additional device coupled to the industrial automation component, at least one device disconnected from the industrial automation component, or a combination thereof. The method also includes generating second image data based on the updated connection data. The second image data includes a second machine-readable indicia having the updated connection data embedded therein. The method also includes displaying the second image data via an electronic display of the industrial automation component.

In yet another embodiment, an industrial automation component includes an electronic display that displays machine-readable indicia. The machine-readable indicia may be scanned by an image sensor. The industrial automation component also includes a processor communicatively coupled to the electronic display. The processor receives data associated with the industrial automation component and generates a first machine-readable indicia based on the data. The first machine-readable indicia may be displayed via the electronic display. The processor also receives updated data associated with the industrial automation component and generates a second machine-readable indicia based on the updated data. The second machine-readable indicia may be displayed via the electronic display.

### DRAWINGS

These and other features, aspects, and advantages of the present disclosure will become better understood when the following detailed description is read with reference to the accompanying drawings in which like characters represent like parts throughout the drawings, wherein:
FIG. 1 is a block diagram representing example hierarchical levels of an industrial automation system, in accordance with an embodiment;
FIG. 2 is a block diagram of an example industrial automation component of the industrial automation system of FIG. 1, in accordance with an embodiment;
FIG. 3 illustrates an example of the industrial control system of the industrial automation system of FIG. 1, in accordance with an embodiment;
FIG. 4 is a block diagram that depicts hierarchical levels of the example industrial automation system of FIG. 1, in accordance with an embodiment;
FIG. 5 is a block diagram of a data analysis system that may be employed in the industrial automation system of FIG. 1. in accordance with an embodiment;
FIG. 6 is a block diagram of an image generation system of the industrial automation component of FIG. 2. in accordance with an embodiment;
FIG. 7 is a block diagram of a secondary device of the industrial automation system of FIG. 1. in accordance with an embodiment;
FIG. 8 is a block diagram of an image recognition system of the secondary device of FIG. 7, in accordance with an embodiment;
FIG. 9 is a flowchart of a method for receiving data associated with the industrial automation component of FIG. 2 based on image data, in accordance with an embodiment,
FIG. 10 is a flowchart of a method for authenticating the secondary device of FIG. 7 based on image data, in accordance with an embodiment;
FIG. 11 is a flowchart of a method for generating task instructions associated with the industrial automation component of FIG. 2 based on image data, in accordance with an embodiment;
FIG. 12 is a flowchart of a method for generating images for display on an electronic display of the industrial automation component of FIG. 2 based on receiving an indication associated with scanning another image, in accordance with an embodiment; and
FIG. 13 is a flowchart of a method for generating images for display on the electronic display of the industrial automation component of FIG. 2 based on receiving updated data, in accordance with an embodiment.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. One or more specific embodiments of the present embodiments described herein will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

As mentioned above, industrial automation systems generate various data associated with different industrial automation devices (e.g., controllers, motors, drives, sensors, and the like). Machine-readable indicia, such as Quick Response (QR) codes (which may also be referred to as a "QR image"), barcodes, magnetic strips, may provide access to stored data and/or information. In certain instances, the machine-readable indicia may be displayed on an electronic display of an industrial automation device. As such, a secondary device (e.g., a mobile device, a tablet, a wearable device, and the like) may scan and/or capture image data of the QR image. The secondary device may utilize the QR image to access the stored data. For example, the secondary device may process the QR image and may access a website based on information embedded within the QR image. Moreover, the industrial automation device may update the QR code and/or generate a new QR code based on updated data. For example, the industrial automation device may update the QR code in response to connection of a new industrial automation device, downloading a software update, performance of a maintenance task, or any other suitable change. Additionally, the machine-readable indicia may provide authentication of an operator and/or a secondary device to perform a maintenance task, access information associated with the industrial automation device, and the like.

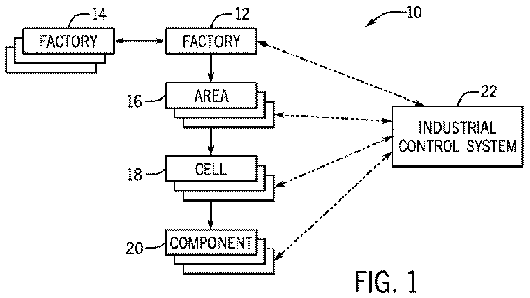

By way of introduction, FIG. 1 depicts a block diagram of an example of hierarchical levels that may represent an industrial automation system 10. The industrial automation system 10 may be any system in the material handling, packaging industries, manufacturing, processing, batch processing, or any technical field that employs the use of one or more industrial automation components 20. In one embodiment, the industrial automation system 10 may include a factory 12 that may encompass part of the entire industrial automation system 10. As such, the industrial automation system 10 may include additional factories 14 that may be employed with the factory 12 to perform an industrial automation process or the like.

Each factory 12 (or factory 14) may be divided into a number of areas 16, which may, for example, include different production processes that use different types of industrial automation components 20. In one example, one area 16 may include a sub-assembly production process and another area 16 may include a core production process. In another example, each area 16 may be related to a different operation being performed in the manufacturing process. For instance, in a jelly bean manufacturing system, the areas 16 may include a jelly bean making area, a packing area, a water filtration area, and the like. In yet another example, the area may include a production line in which a particular industrial process may be performed. Referring back to the jelly bean manufacturing system example, the production line may include a cooking line in which the jelly beans may be created, a sorting line where the jelly beans may be sorted according to a respective flavor, and a packing line where the sorted jelly beans may be packaged into boxes or the like.

The area 16 may also be associated with physical locations of a number of industrial automation components 20 with respect to the industrial automation system 10. The areas 16 may also be related to different discipline areas of the industrial automation system 10. such as batch operation areas, continuous operation areas, discrete operation areas, inventory operation areas, and the like.

The areas 16 may be subdivided into smaller units, or cells 18, which may be further subdivided into corresponding industrial automation components 20. Using the example described above, the sub-assembly production process area 16 may be subdivided into cells 18 that may denote a particular group of industrial automation components 20 that may be used to perform one aspect of the sub-assembly production process. As such, the cell 18 may include a portion of the area 16 such as a first part of a production line. The cell 18 may also include different parts of a particular procedure.

These cells 18 may then be further subdivided into corresponding industrial automation components 20, which may correspond to individual industrial automation components, such as controllers, input/output (I/O) modules, motor control centers, motors, human machine interfaces (HMIs), operator interfaces, contactors, starters, sensors, drives, relays, protection devices, switchgear, compressors, network switches (e.g.. Ethernet switches, modular-managed, fixed-managed, service-router, industrial, unmanaged, etc.), and the like. Although the factory 12. the factories 14. the areas 16, and the cells 18 are termed as factories, areas, and cells, it should be noted that in various industries these groupings may be referred to differently in different industries or the like. For instance, the groupings may be termed as units, areas, sites, and the like.

The industrial automation components 20 may also be related to various industrial equipment, such as mixers, machine conveyors, tasks, skids, specialized original equipment manufacturer (OEM) machines, and the like. The industrial automation components 20 may also be associated with devices used by the equipment such as scanners, gauges, valves, flow meters, and the like. In one embodiment, every aspect of the component 20 may be controlled or operated by a single controller (e.g., control system). In another embodiment, the control and operation of each aspect of the component 20 may be distributed via multiple controllers (e.g., control systems).

The industrial automation components 20 may be used within the corresponding cell 18, area 16, or factory 12 to perform various operations for the respective cell 18, area 16, or factory 12. In certain embodiments, the industrial automation components 20 may be communicatively coupled to each other, to an industrial control system 22, or the like. Additionally, the industrial control system 22 may also be communicatively coupled to one or more control systems that may monitor and/or control the operations of each respective cell 18. area 16, or factory 12.

As such, the industrial control system 22 may be a computing device that may include communication capabilities, processing abilities, and the like. For example, the industrial control system 22 may be a controller, such as a programmable logic controller (PLC), a programmable automation controller (PAC), or any other controller that may monitor, control, and operate an industrial automation device or component. The industrial control system 22 may be incorporated into any physical device (e.g., the industrial automation components 20) or may be implemented as a stand-alone computing device (e.g., general purpose computer), such as a desktop computer, a laptop computer, a tablet computer, a mobile device, or the like.

In certain embodiments, the industrial control system 22 may be implemented within devices that enable the industrial automation components 20 to connect and communicate with each other. For instance, the industrial control system 22 may be implemented within network routers and/or switches. The network routers and/or switches may be located at a boundary of a network (e.g., cloud), serving as edge devices that control data flow at the boundary of the network. In this manner, the network routers and/or switches may host the industrial control system 22 that may be used to control and operate the industrial automation components 20 that may be communicatively coupled to the respective network router and/or switch. Since network routers and/or switches may server as a hub for data transfers between the industrial automation components 20, the industrial control system 22 embedded within the routers and/or switches may be strategically positioned within a data network to have access or receive data associated with various industrial automation components 20. As such, the industrial control system 22 may perform various types of analyses on the received data and may then control and operate the respective industrial automation components 20 more efficiently or effectively based on the results of the analyses.

In addition to the physical devices mentioned above, the industrial control system 22 may include a software-based emulation of any of the aforementioned physical devices. For example, the industrial control system 22 may be implemented as software modules that may perform similar operations as certain hardware controllers, devices, and the like. As such, the industrial control system 22 may create virtual instances of the hardware components (e.g., controllers, I/O modules). That is, the industrial control system 22 may create digital representations (e.g., digital twins) for corresponding hardware components. These virtual instances may provide more flexible ways in which the industrial control system 22 may be implemented to monitor and control the industrial automation components 20.

In one embodiment, the industrial control system 22 may be implemented virtually in a cloud-accessible platform (i.e., cloud-computing system), one or more servers, in various computing devices (e.g., general purpose computers), and the like. As such, the industrial control system 22 may operate as a soft controller or as a control engine running in the cloud-computing system. By virtually implementing the industrial control system 22 in a cloud-computing system, the industrial control system 22 may use a distributed computing architecture to perform various analyses and control operations. As more data associated with the industrial automation components 20. the cells 18, the areas 16, and the factories 14 become available, the distributed computing architecture in the cloud-computing system may enable data analysis to be performed more efficiently. That is, since the cloud-computing system may incorporate numerous computing systems and processors to perform the data analysis, the results of the analysis may be available more quickly. In this way, the respective operations of the industrial automation components 20, the cells 18, the areas 16, and the factories 14 may be controlled in real-time or near real-time.

Keeping the foregoing in mind, it should be understood that the industrial control system 22, as mentioned throughout this disclosure, may be implemented as physical components and/or virtual components (i.e., software-based) used to monitor and/or operate the industrial automation components 20. the cells 18, the areas 16, and the factories 14. Moreover, by providing the ability to incorporate the industrial control system 22 into various types of environments, the industrial automation system 10 may be well suited to expand and grow with the addition of new industrial automation components 20.

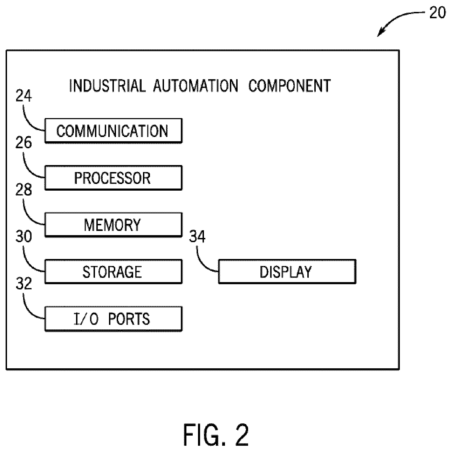

Continuing with the drawings, FIG. 2 is a block diagram of the industrial automation component 20 that may be employed in any suitable industrial automation system 10 to perform various operations of an industrial automation process. The industrial automation component 20 may include a communication component 24, a processor 26, a memory 28, a storage 30, input/output (I/O) ports 32. a display 34. additional sensors (e.g., image sensors, location sensors, vibration sensors, temperature sensors), and the like. The communication component 24 may be a wireless or wired communication component that may facilitate communication between the industrial automation component 20. cloud-based computing systems, and other communication capable devices. In some embodiments, the industrial automation component 20 may be communicatively coupled to the industrial control system 22, other industrial automation components 20, or the like via a communication network such as EtherNet/IP, ControlNet, DeviceNet, or any other industrial communication network protocol that allows the respective type of connection.

The processor 26 may be any type of computer processor or microprocessor capable of executing computer-executable code. The processor 26 may also include multiple processors that may perform the operations described below. The memory 28 and the storage 30 may be any suitable articles of manufacture that can serve as media to store processor-executable code, data, or the like. These articles of manufacture may represent computer-readable media (e.g., any suitable form of memory or storage) that may store the processor-executable code used by the processor 26 to perform the presently disclosed techniques. Generally, the processor 26 may execute software applications that include programs that enable the industrial automation component to generate operational data, receive data (e.g., image data), and generate machine-readable indicia (e.g., QR codes, barcodes, and the like) to display on an electronic display of the industrial automation component 20. That is, the software applications may communicate with the industrial control system 22, cloud-based computing systems, secondary devices, and the like and gather information associated with the industrial automation component 20 of the industrial automation system 10. other industrial automation components 20, secondary devices, users, and the like.

The memory 28 and the storage 30 may also be used to store the data, analysis of the data, the software applications, and the like. The memory 28 and the storage 30 may represent non-transitory computer-readable media (e.g., any suitable form of memory or storage) that may store the processor-executable code used by the processor 26 to perform various techniques described herein. It should be noted that non-transitory merely indicates that the media is tangible and not a signal.

In one embodiment, the memory 28 and/or the storage 30 may include a software application that may be executed by the processor 26 and may be used to store data (e.g., operational data), receive data (e.g., image data), generate machine-readable indicia, and display machine-readable indicia. As used herein, operational data may refer to operation, status, sensor data, operational modes, alarm conditions, or the like, that may be desirable to output for analysis with information technology (IT) data from an IT network, for storage in an IT network, for analysis with expected operation set points (e.g., thresholds), or the like. The software application may enable the industrial automation component 20 to perform various functionalities, such as receiving data from a cloud-computing system, generating operational data, generating machine-readable indicia based on various data, displaying machine-readable indicia, and so forth.

The I/O ports 32 may be interfaces that couple to other industrial automation components 20, other peripheral components, such as input devices (e.g., keyboard, mouse), sensors, I/O modules, and the like. The I/O ports 32 may enable the industrial automation component 20 to communicate with control systems, computing devices, peripheral components, and/or other industrial automation components 20 in the industrial automation system 10 via the I/O modules.

The display 34 may depict visualizations associated with software or executable code being processed by the processor 26. In one embodiment, the display 34 may be a touch display capable of receiving inputs (e.g., navigating a menu) from a user of the industrial automation component 20. As such, the display 34 may serve as a user interface to communicate with the industrial automation component 20 and/or other components in the industrial automation system 10. The display 34 may be used to display a graphical user interface (GUI) for generating machine-readable indicia, device data (e.g., operating data, connection data, authentication data), and the like. The display 34 may be any suitable type of display, such as a liquid crystal display (LCD), plasma display, or an organic light emitting diode (OLED) display, for example. Additionally, in one embodiment, the display 34 may be provided in conjunction with a touch-sensitive mechanism (e.g., a touch screen) that may function as part of a control interface for the industrial automation component 20. In some embodiments, the user interface may be characterized as a human-machine interface (HMI) or the like.

In certain embodiments, the industrial automation component 20 may include an antenna (e.g.. as the communication component 24 or as part of the communication component 24) to receive signals from other electronic devices (e.g., computing devices, industrial automation devices, control systems, and the like). For example, the antenna may receive the signal and may transmit the signal to the processor 26. The processor 26 may determine a command associated with the received signal. For example, a second device may generate and transmit a signal that may be received by the industrial automation component 20. The second device may generate a signal that indicates acknowledgement of a connection between the industrial automation component 20 and the second device. The processor 26 may receive the signal and may perform an action (e.g., generate machine-readable indicia, generate and/or transmit connection data, and the like) based on the received signal.

Additionally, the industrial automation component 20 may include an image sensor. The image sensor may include any image acquisition circuitry such as a digital camera capable of acquiring digital images, digital videos, or the like. For example, the image sensor may capture image data rendered on a display of a second device, such as a secondary device. In certain embodiments, the image sensor may transmit the image data to the processor 26 and the processor 26 may analyze and/or process the image data to facilitate retrieval of data and/or information associated with the second device, such as authentication data. For example, the processor 26 may process the image data and determine authentication data based on the image data. In some embodiments, the authentication data may include information associated with an operator and/or the secondary device. For example, the processor 26 may compare the authentication data with authentication criteria associated with the industrial automation component 20 that may be stored in the memory 28 and/or the storage 30. The authentication criteria may include any number of user access levels associated with a skill level of the operator, an experience level of the operator, a role of the operator, and the like. Each user access level may have a corresponding set of functions or controls available to the operator. As such, the processor 26 may determine the operator and/or the secondary device is authorized to access and/or control the industrial automation component based on the authorization. For example, the processor 26 may enable selection of any number of control elements rendered on the display 34. The processor 26 may receive input indicative of selection of the control elements and may alter an operational status of the industrial automation component based on the input.

Although the components described above have been discussed with regard to the industrial automation component 20, it should be noted that similar components may make up other computing devices described herein, such as the industrial control system 22. Further, it should be noted that the listed components are provided as example components and the embodiments described herein are not to be limited to the components described with reference to FIG. 2. For example, other computing or control devices of the industrial automation system 10 may include one or more components that the industrial automation component 20 includes.

Keeping the foregoing in mind, the industrial automation component 20 may use the communication component 24 to communicatively couple to one or more control systems. The industrial control system 22 may also monitor and/or control the operations of each respective component 20, cell 18. area 16, or factory 12. For example, the industrial control system 22 may receive data from a variety of assets (e.g., the industrial automation components 20, and/or workflows, procedures, and processes related to operating the industrial automation components 20) that may be located in the factory 12, the areas 16, or the cells 18. In one embodiment, the industrial control system 22 or a control system for each area 16, cell 18, or component 20 may receive information related to how the industrial automation system 10 may be subdivided, how each area 16, cell 18, and component 20 may interact with each other, which industrial automation components 20 are part of each factory 12, area 16, or cell 18, or the like. For example, each area 16 may be related to a particular process of a manufacturing process. As such, the information received by the respective control system may detail which processes performed in certain areas 16 may depend on other processes being completed in other areas 16.

In certain embodiments, the respective control system may determine how each component 20 may relate to a respective cell 18 or area 16 based on data received from each respective component 20. For instance, a control system of a first component 20 may receive data from multiple other industrial automation components 20, such as a motor for a conveyer belt and a compressor for some industrial automation device. Upon receiving the data from a second component 20 that corresponds to the motor for the conveyer belt, the control system of the first component 20 may determine that the second component 20 is associated with some cell 18, which may be part of some area 16, based on a speed in which the motor may be operating. That is, the control system of the first component 20 may refer to information, such as system design parameters for the industrial automation system 10, and determine where the motor is located by identifying a motor with operating parameters, as specified by the system design parameters, having a substantially similar speed as the received speed. In certain embodiments, the speed at which the motor may be operating may not be sufficient to identify a particular motor if other motors in the industrial automation system 10 are operating at the same speed. As such, the control system may identify a motor by monitoring a speed profile (i.e., speed curve over time) of each motor in the industrial automation system 10. Additional ways in which a control system may identify particular industrial automation components 20 may include monitoring an operating mode (e.g., running/stopped/paused) of each component 20. examining network related information (e.g. IP addresses, MAC addresses, sub-net masks, or a combination of any of these, etc.) associated with each component 20, monitoring operating temperatures of each component 20 if available (e.g., industrial automation components 20 in certain cells 18 are exposed to more heat/cold than others cells 18), monitoring energy consumption data associated with each component (e.g., larger drives could be part of and used in certain cells 18 while smaller drives are used in other cells 18), and so forth.

In any case, after analyzing the data associated with each component 20, the control system of the first component 20 may determine its relationship with other industrial automation components 20 of the industrial automation system with respect to the various scopes or hierarchical levels of the industrial automation system 10. By understanding the relationship to other industrial automation components 20 with respect to various scopes of the industrial automation system 10, the control system of the first component 20 may become aware of conditions occurring in processes, areas 16, or cells 18 that may directly or indirectly affect the operations of the first component 20. As such, the control system of the first component 20 may adjust its operations and send commands to other industrial automation components 20 to adjust their respective operations to compensate or minimize negative consequences that may occur due to the conditions in the areas 16, the cells 18. or the like. For example, production capacity of upstream or downstream cells being automatically adjusted by control systems in the respective cells by monitoring production levels of the cells adjacent to or related to the respective control system. As a result, the control systems may optimize production of the industrial automation system 10 by reducing the effects of bottlenecks cells that may lead to over or under production. In another example, sections of a conveyor used to transport materials may start adjusting their respective speeds based on other sections of the conveyor or production variances associated with the area 16, the cells 18, or the entire factory 12. In yet another example, the control system of the first component 20 may take into account energy consumption data associated with a second component to adjust the operation of the first component 20 (e.g. go to a lower energy consumption mode to maintain overall consumption constant, etc.). Additionally, after each component 20 becomes aware of the presence or existence of another component 20, some of the industrial automation components 20 may negotiate and determine optimal production rates for each component 20 based on pre-determined criteria such as energy consumption/rates, production mix, production levels, and the like.

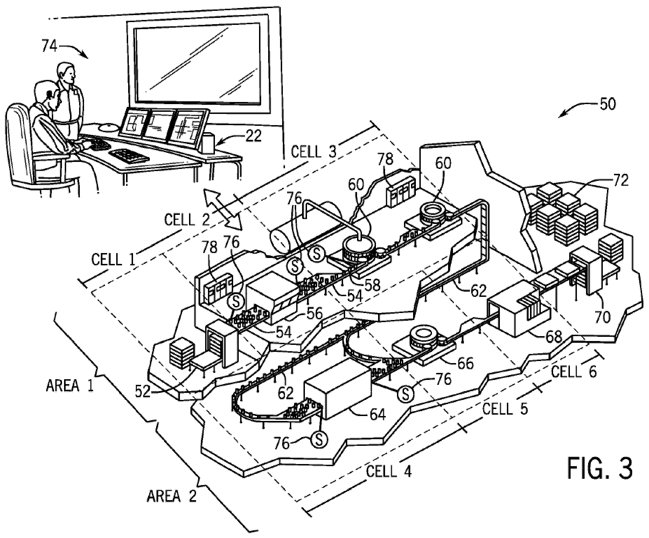

Keeping the foregoing in mind, an example industrial automation system 10 of a packaging factory 50 and how the packaging factory 50 may be divided and sub-divided into areas 16 and cells 18 are depicted in FIG. 3. As illustrated in FIG. 3. the packaging factory 50 may represent an exemplary high-speed packaging line that may be employed in the food and beverage industry that may process beverage containers (i.e., a beverage line). As such, the packaging factory 50 may include industrial automation components that, for example, may enable machine components to fill, label, package, or palletize containers. The packaging factory 50 may also include one or more conveyor sections that may transport, align, or buffer containers between the machine components. Although FIG. 3 illustrates a packaging factory, it should be noted that the embodiments described herein are not limited for use with a packaging factory. Instead, it should be understood that the embodiments described herein may be employed in any industrial automation environment.

As illustrated in FIG. 3. the packaging factory 50 may include machine components configured to conduct a particular function with respect the beverage packaging process. For example, the beverage packaging process begins at a loading station 52, where pallets of empty cans or bottles to be filled are fed into packaging factory 50 via a conveyor section 54. The conveyor section 54 transports the empty cans from the loading station 52 to a washing station 56, where the empty cans and bottles are washed and prepared for filling. As the washed cans and bottles exit the washing station 56, the conveyor section 54 may gradually transition into an aligning conveyor section 58, such that the washed cans and bottles enter a filling and sealing station 60 in a single-file line.

The filling and sealing station 60 may function at an optimal rate when the washed cans and bottles enter the filling and scaling station 60 in a steady, uniform stream. However, if the transition between the conveyor section 54 and the aligning conveyor section 58 is erratic or faster than desired, the filling and sealing station 60 may not function at an optimal rate. As such, optimizing performance parameters (e.g., speed, size, function, position/arrangement, or quantity) of the conveyor sections (i.e., conveyor section 54 or aligning conveyor section 58) may be beneficial to the efficiency of the packaging factory 50.

As the sealed cans exit the filling and scaling station 60. a buffering conveyor section 62 may hold the sealed cans to delay their entry into the next station. In addition, the buffering conveyor section 62 may transport the scaled cans in a single-file line so that the sealed cans arrive at a sterilization station 64 or a labeling station 66 at a desired time with the desired quantity of cans. Similar to the filling and sealing station 60, the packaging station 64 or the labeling station 66 functions efficiently when the buffering conveyor section 62 operates at optimal performance parameters (e.g., optimal speed, size, function, position/arrangement or quantity). After the cans and bottles have been sterilized and/or labeled, they are packaged into cases (e.g., 6-pack, 24-pack, etc.) at a packaging station 68, before they are palletized for transport at station 70 or stored in a warehouse 72. Clearly, for other applications, the particular system components, the conveyors and their function will be different and specially adapted to the application.

The packaging factory 50 may also include the industrial control system 22, which may be located in a control room 74 or the like. The industrial control system 22 may be coupled to one or more sensors 76, which may monitor various aspects of the machine components or conveyor sections of the packaging factory 50. The sensors 76 may include any type of sensor, such as a pressure sensor, an accelerometer, a heat sensor, a motion sensor, a voltage sensor, and the like. The sensors 76 may be located in various positions within the packaging factory 50, and may measure a parameter value of interest relating to the beverage packaging process during the operation of the packaging factory 50. For example, in certain embodiments, the sensors 76 may include sensors configured to measure the rate of bottles or containers per minute (BPM) entering or leaving a machine component (i.e., stations 54, 56, 58, 64, 66, 68 or 70), or the rate of accumulation of bottles on a portion of a conveyor section (e.g., conveyor section 54 or 62). In general, any sensors 76 capable of measuring a parameter value of interest relating to the beverage packaging process of the packaging factory 50 (e.g., rate, pressure, speed, accumulation, density, distance, position/arrangement, quantity, size, and so forth) may be used.

In some embodiments, the packaging factory 50 may include a number of industrial automation power components 78 that may be used to control power used by various machine components in the packaging factory 50. The power components 78 may include devices, such as drives, motors, inverters, switch gear, and the like, which may be used to operate a corresponding machine component. For example, the conveyor section 54 may rotate using a motor, which may be controlled via a power component 78, such as a variable frequency drive.

The power component 78 may include a control system that may monitor and control the operations of the respective power component 78. As such, the power component 78 may correspond to the component 20 described above with respect to FIG. 1. Referring back to the example above, the control system of the power component 78, such as the drive used to control the motor rotating the conveyor section 54, may monitor a voltage provided to the motor and may determine the speed at which the conveyor section 54 may be moving. In one embodiment, the control system of the power component 78 may send the data related to the speed at which the conveyor section 54 may be moving to the industrial control system 22 or to other control systems that may control other industrial automation components 20. In this manner, the industrial control system 22 or other control systems may be aware of the operations of the power component 78 and may account for these operations when determining how its respective component should operate.

Keeping the packaging factory 50 of FIG. 3 in mind, the industrial control system 22 may receive data from multiple power components 78 dispersed throughout the packaging factory 50. The industrial control system 22 may then contextualize the received data with respect to different scopes or hierarchical levels as described above with reference to FIG. 1.

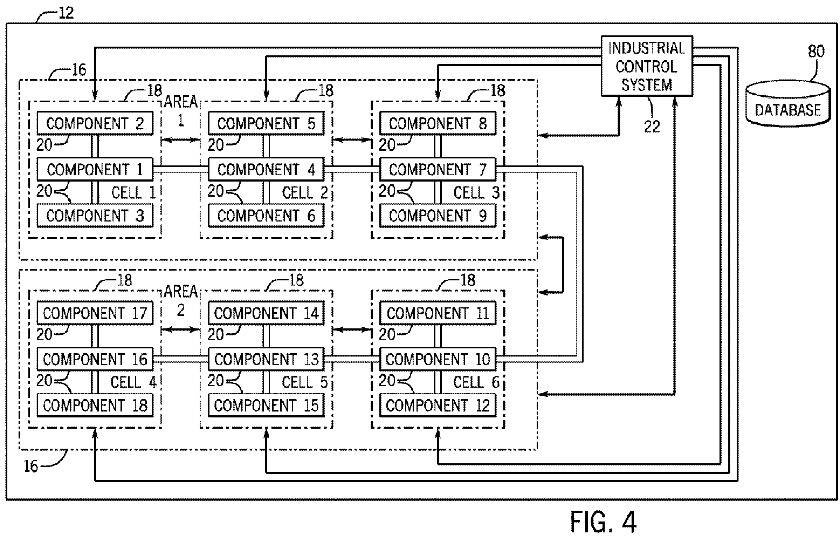

In one embodiment, the scopes of the packaging factory 50 may be categorized based on functions of the components 20 and the cells 18 of the packaging factory 50. For instance, referring to both FIGS. 3 and 4, the loading station 52 may be categorized as cell 1, the washing station 56 may be categorized as cell 2, the sealing station 60 may be categorized as cell 3. the sterilization station 64 may be categorized as cell 4. the labeling station may be categorized as cell 5 and the packaging station 68 may be categorized as cell 6. As shown in FIG. 4, each component 20 may correspond to a particular cell 18. That is, each component 20 that may be used by the respective station may be categorized as part of the respective cell 18.

In the same manner, the areas 16 may be categorized based on functions of the cells 18 of the packaging factory 50. For instance, cells 1-3 of the packaging factory 50 may correspond to a preparation process and cells 4-6 of the packaging factory 50 may correspond to a packaging process. As such, cells 1-3 may be categorized as area 1 and cells 4-6 may be categorized as area 2.

In one embodiment, the industrial control system 22 may determine the categories or scopes of the industrial automation system 10 based on a factory diagram or specification that describes the various processes employed by the industrial automation system 10 and the components 20 used for the respective processes. In another embodiment, each control system for each component 20 may include information indicating the function of the component 20, a location of the component 20 with respect to the industrial automation system 10, a part of a manufacturing process that the component 20 is associated with, or the like. Here, each respective control system of each respective component 20 may send this information to the industrial control system 22 or to other control systems of nearby components 20. The control system that receives the information may then determine how the component 20 that transmitted the information may relate to the various scopes of the industrial automation system 10, how the component 20 that received the information may be related to the component 20 that transmitted the information with respect to the various scopes of the industrial automation system 10, and the like. In certain embodiments, each control system may send information related to the scopes of the industrial automation system 10, information detailing a relationship between each scope of the industrial automation system 10, information detailing a relationship between each component 20 in the industrial automation system with respect to each scope of the industrial automation system 10, and the like to a database 80, which may be accessible by each control system and/or each component 20 as a centralized database or a database distributed between a number of machines, computers, or the like.

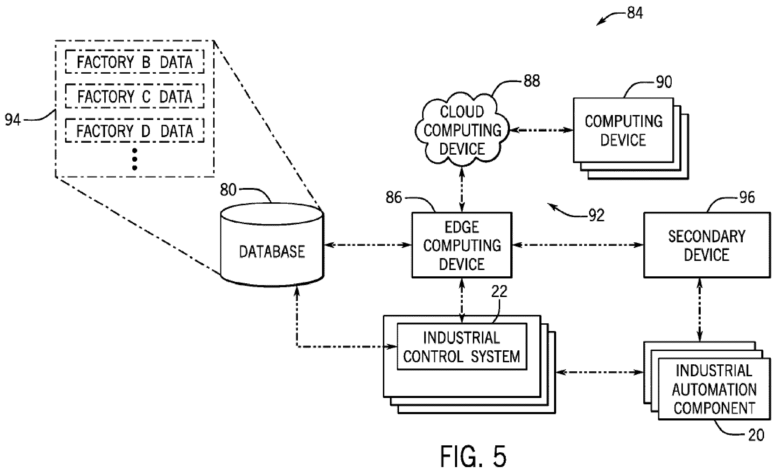

Additionally, the industrial control system 22 and/or the industrial automation components 20 may communicate with other computing devices, such as computing devices not included in the factory 12 that may be controlled by other entities. For example, FIG. 5 depicts a data analysis system 84 that includes the industrial control system 22, the industrial automation component 20, the database 80, an edge computing device 86, a cloud computing device 88, one or more other computing devices 90, and a secondary device 96. The industrial control system 22, the component 20, the secondary device 96, and the database 80 may communicate with one another. Moreover, the industrial control system 22, the industrial automation component 20, the secondary device 96. and the database 80 may be communicatively coupled to the edge computing device 86, which may be a computing device such as a computer, server, router, routing switch, or integrated access device (IAD) that manages the flow of data into and out of a network, such as industrial automation network included in the factory 12 (e.g., a network utilized by the industrial control system 22, the industrial automation component 20, and/or the secondary device 96 to communicate with other components of the industrial automation system 10 and the database 80). Accordingly, the edge computing device 86 may be included within the industrial automation system 10. Furthermore, while FIG. 5 includes a single edge computing device 86. in other embodiments, the data analysis system 84 may include more than one edge computing device 86.

The computing devices 90 may include computers, servers, or the like that are operated or managed by other entities. For example, the computing devices may be associated with other factories or an entity that provides one or more services for the factory 12 (or industrial automation system 10), such as data management, data analysis, security services, or diagnostic services (e.g., to determine or resolve potential errors associated with the industrial automation system 10 or the operation thereof). The computing devices 90 may communicate with the industrial automation system 10 (e.g., via the industrial control system 22, via the industrial automation component 20, via the secondary device 96) and the database 80 via the cloud computing device 88 and the edge computing device 86 utilizing a data pipeline that may be partially implemented via communication link 92. The communication link 92 may include communication infrastructure, such as a wired connection, wireless connection, or both that communicatively couples the edge computing device 86, the cloud computing device 88, and the computing devices 90 to one another. The data pipeline generally refers to a communication infrastructure (e.g., the communication link 92) as well as one or more processes utilized to send, receive, and characterize data that is communicated using the communication infrastructure. As such, the techniques described herein may be implemented using already existing communication infrastructure (e.g., wired networks, wireless networks, or a combination thereof), thereby avoiding adding more communication infrastructure in potentially already crowded industrial environments.

The edge computing device 86, the cloud computing device 88, and the computing devices 90 may each include one or more processors that execute computer-readable instructions, such as instructions that may be stored in memory or a storage device that may be included in the edge computing device 86. the cloud computing device, and/or the computing devices 90. By executing such instructions, the one or more processors included in the edge computing device 86. the cloud computing device, and the computing devices 90 may communicate with one another via the data pipeline. In other words, the edge computing device 86. the cloud computing device 88, and the computing devices 90 may include the communication component 24, processor 26, memory 28, storage 30, input/output (I/O) ports 32, and display 34 described above and utilize these components to enable communication via the data pipeline. Alternatively, in other embodiments, the data analysis system 84 may not include the cloud computing device 88. In such embodiments, the computing devices 90 may communicate with the industrial control system 22, industrial automation component 20. the secondary device 96, and database 80 via just the edge computing device 86. Furthermore, in some embodiments, the cloud computing device 88 may be implemented in the form of a system that includes more than one computing device.

The industrial control system 22, the industrial automation component 20, the secondary device 96, and the database 80 may share various types of data with the computing devices 90 using the data pipeline. Likewise, the computing devices 90 may communicate with the industrial control system 22, the industrial automation component 20, the secondary device 96. and the database 80 via the data pipeline. For example, the industrial control system 22, the industrial automation component 20, the secondary device 96, and database 80 may share data regarding the factory 12 (and data 94 regarding factories 14 in the case of the database 80) or components thereof with the edge computing device 86, which may selectively communicate the data to the cloud computing device 88. For instance, the edge computing device 86 may group data received from the industrial automation system 10 (e.g., via industrial control system 22, industrial automation component 20, the secondary device 96, or the database 80), apply metadata (e.g., data tags) to the received data, or both as part of a protocol before sending the data to the cloud computing device 88. By doing so, data associated with the factory 12 (or factories 14) may be characterized in a way that enables the cloud computing device 88 to determine which of the computing devices 90 to which to send the data. Moreover, characterizing the data enables the computing devices 90 and the cloud computing device 88 to interpret the data. For instance, as described above, the data associated with the factory 12 may pertain to a plethora of different devices that are made by different manufacturers and communicate using different protocols, such as FactoryTalk Live Data, EtherNet/IP, Common Industrial Protocol (CIP), OPC Direct Access (e.g., machine to machine communication protocol for industrial automation developed by the OPC Foundation), or any suitable communication protocol (e.g. DNP3. Modbus, Profibus. LonWorks, DALI, BACnet, KNX, EtiOcean). By characterizing the data, the computing devices 90 and the cloud computing device 88 can determine what each particular portion of the data is. This may enable the computing devices 90 and cloud computing device 88 to determine a layout of the factory 12, the automation devices included in the factory 12 (or factories 14), and what the various forms of received data are (e.g., power consumption data, log files, or other data associated with the factory 12 (or factories 14).

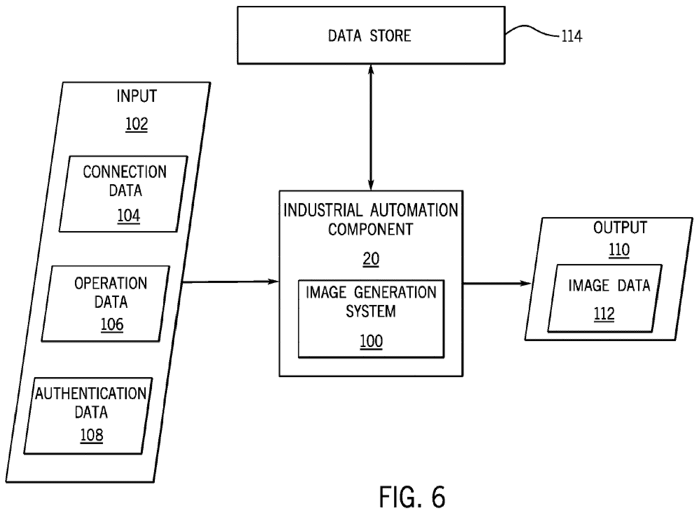

To elaborate further on the industrial automation component 20, FIG. 6 is a block diagram of the industrial automation component 20 incorporating an image generation system 100. The image generation system 100 may be a software application and may be stored in the memory 28 and/or storage 30. The image generation system 100 may be executed by the processor 26 and may be utilized to generate machine-readable indicia on the display 34. In some embodiments, the image generation system 100 may receive a set of inputs 102. such as connection data 104, operation data 106, and authentication data 108, and may generate a set of outputs 110, such as image data 112. The connection data 104 may include data regarding a number of active connection ports, a number of inactive connection ports, a number of coupled devices (e.g., control systems, controllers, industrial automation components), a description of the coupled devices (e.g., model number, device type, respective connection port), an elapsed time from connection to the industrial automation component 20, an elapsed time from a last data packet sent from the device, a wire type, a communication protocol, and the like. The operation data 106 may include operational parameters, operational history (e.g., component installation date/time, initial startup date/time, initial configuration date/time), status information, sensor data, operational modes, alarm conditions (e.g., current alarms, historical alarms, alarm start times, alarm stop times, operators associated with the alarms), spare parts, parts orders, order numbers, and the like. In some embodiments, the operation data 106 may include a parts list associated with the industrial automation component 20, a user manual, diagrams, drawings, and the like. In some embodiments, the operation data 106 may include a list of obsolete parts, a list of parts past an expected lifetime, a list of faulty parts, and the like.

The authentication data 108 may include authentication criteria associated with the industrial automation component 20. For example, the authentication criteria may include an operator skill level, operator role (e.g.. service technician, plant manager, and so forth), a list of user IDs, and so forth. Additionally or alternatively, the authentication data 108 may include any number of user IDs associated with operators and/or secondary devices that may be permitted to access data associated with the industrial automation component 20. Moreover, the authentication data 108 may include corresponding passwords associated with the user IDs and the industrial automation component 20 may receive the user IDs and passwords as input to authenticate an operator and/or secondary devices 96. Additionally or alternatively, the image generation system 100 may receive facility data. For example, the image generation system may receive a wiring diagram associated with the industrial automation component 20 and any other connected components of the industrial automation system.

In certain embodiments, during installation and/or configuration of the industrial automation component 20. the processor 26 may generate and display a prompt to input information associated with the installation and/or configuration. For example, the processor 26 may generate a graphical user interface that may be rendered on the display 34. In some embodiments, the graphical user interface may include any number of data fields that may receive input data from an operator. For example, the data fields may include a component location data field associated with a location (e.g., factory, plant, building, city, and the like), an installation data field associated with an installation date of the industrial automation component 20. a configuration data field associated with an initial configuration date, an operator data field associated with an operator that performed installation and/or configuration of the industrial automation component 20, a manufacturing process data field, and any other suitable data field. In some embodiments, the industrial automation component 20 may receive the input data from another device, such as the secondary device 96. For example, the operator may input data associated with the industrial automation component 20 into the secondary device 96 and the secondary device 96 may transmit the data to the industrial automation component 20. The industrial automation component 20 may receive the data and may store the data in the memory 28 and/or the storage 30. Moreover, the operation data 106 may include a description of the industrial automation component 20 (e.g., a serial number, a model number, a catalog number, a device type, and any other suitable information).

The image generation system 100 may generate the image data 112 based at least in part on the set of inputs 102. The image data 112 may include machine-readable indicia (e.g., barcode, QR code, and so forth) that may be displayed on the display 34 of the industrial automation component 20. For example, the machine-readable indicia may enable an image sensor (e.g., a camera or other scanning device) of the secondary device 96 to detect and capture images including the machine-readable indicia. The secondary device 96 may generate image data based at least in part on the captured images and may utilize the image data 112 to request and/or receive data associated with the industrial automation component 20. As such, the image data 112 may provide data and/or information associated with current statuses of the industrial automation component 20 or enable the secondary device 96 to access such information.

In some embodiments, the industrial automation component 20 may render on the display 34 a set of machine-readable indicia. For example, the processor 26 may render a first machine-readable indicia that facilitates access to device information (e.g., device type, model number, serial number, and the like.). Moreover, the industrial automation component 20 may receive a signal (e.g., data) from the secondary device 96 that identifies a particular operator, a particular operator task (e.g., maintenance, repair, installation, configuration, software update, and any other suitable operator task), and the like. Accordingly, the industrial automation component 20 may render a second machine-readable indicia that facilitates access to additional device information based on the signal received from the secondary device 96. For example, the additional device information may include a maintenance history (e.g., maintenance actions, maintenance operators, maintenance dates, scheduled maintenance, and the like), software being executed on the industrial automation component 20, and so forth. Additionally or alternatively, the industrial automation component 20 may render additional machine-readable indicia associated with tasks to be performed on the industrial automation component 20. In certain embodiments, the industrial automation component 20 may receive a signal from the secondary device 96 and may process the signal to identify a particular operator and/or a particular operator task. For example, the industrial automation component 20 may identify the operator as being capable of performing a maintenance task. As such, the industrial automation component 20 may render machine-readable indicia that indicates a preventative maintenance task that is due within a predetermined time period (e.g., one month, one week, one day, and so forth) or overdue. The secondary device 96 may capture the image data 112 associated with the machine-readable indicia and may process the image data 112. Accordingly, the secondary device 96 may retrieve a procedure and/or steps associated with the preventative maintenance task. Additionally or alternatively, the industrial automation component 20 may render machine-readable indicia that indicate a set of tasks that may be performed on the industrial automation component 20. The secondary device 96 may scan the image data 112 and may retrieve the set of tasks based on the image data 112. In certain embodiments, the secondary device 96 may determine whether the operator is authorized to perform any number of the tasks. For example, the secondary device 96 may compare operator attributes (e.g., experience, certifications, licenses, skills, security clearance, and so forth) and task criteria (e.g., required experience level, required certifications, required licenses, required skills, required security clearance, and so forth). Moreover, the secondary device 96 may determine whether the operator attributes satisfy any number, a threshold number, or all of the task criteria to determine authorization for the operator. If the secondary device 96 determines the operator is authorized to perform the task, the secondary device 96 may retrieve a workflow, steps, or procedure to complete the task. For example, the secondary device 96 may retrieve the workflow from the edge computing devices 86, the cloud computing devices 88, the computing devices 90, and the like.

Additionally, the industrial automation component 20 may transmit the connection data 104, the operation data 106, the authentication data 108, or any combination thereof for storage in a data store 114. For example, the data store 114 may include (or be included in) the memory 28, the storage 30, or the database 80, be included in the edge computing devices 86, the cloud computing devices 88, the computing devices 90 (e.g., a memory or storage device included in (the edge computing devices 86, the cloud computing devices 88, or the computing devices 90), or any combination thereof. In certain embodiments, the data store 114 may include separate data tables, each data table corresponding to a separate industrial automation component 20. Additionally or alternatively, the industrial automation component 20 may transmit a device identifier associated with the data and the data store 114 may store the data and the device identifier. For example, the device identifier may include a serial number, a model number, a model name, a device type, a facility name associated with the device, or any other suitable information that facilitates identification of the device, or any combination thereof. In some embodiments, the data store 114 may include a mapping between the device identifier and data associated with the industrial automation component. As such, the industrial automation component 20 may provide up-to-date data to any number of data stores. Accordingly, the secondary device 96 may scan and/or capture the image data 112 and may retrieve the data associated with the industrial automation component 20. For example, the secondary device 96 may process the image data 112 to determine a device identifier and may transmit the device identifier to the data store 114. The data store 114 may retrieve and transmit the data associated with the device identifier based on the mapping. Additionally or alternatively, the industrial automation component 20 may provide the data to the industrial control system 22 and the industrial control system 22 may transmit the data to any number of devices for storage of the data. Additionally, the industrial control system 22 may store the data. In some embodiments, the image data 112 may include the connection data 104, the operation data 106, the authentication data 108, or any portion thereof. As such, the secondary device 96 may receive the image data 112 and may analyze the image data 112 to identify the device data (e.g., the operation data 106, connection data 104, authentication data 108, or any combination thereof). Moreover, the image data 112 may include any number of tasks to be performed on the industrial automation component 20 and corresponding instruction sets to perform the tasks. As such, the image data 112 may provide the secondary device 96 with information and/or tasks associated with the industrial automation component 20 while being disconnected from any external networks (e.g., networks outside the factory).

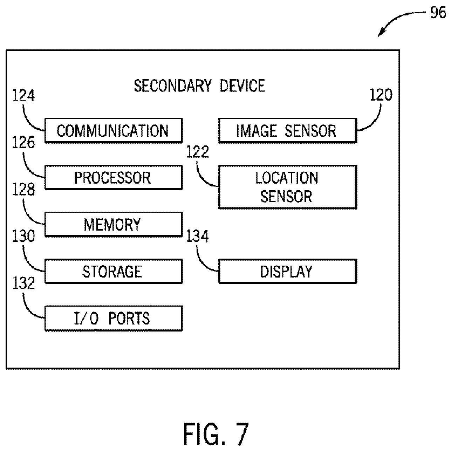

Continuing with the drawings, FIG. 7 is a block diagram of the secondary device 96 that may be employed in any suitable industrial automation system 10 to capture images of machine-readable indicia on the display 34 of the industrial automation component 20. The secondary device 96 may include a communication component 124, a processor 126, memory 128, storage 130, I/O ports 132, and a display 134, which may respectively be similar and function similarly as the communication component 24, processor 26, memory 28, storage 30, I/O ports 32, and display 34 described above with respect to the industrial automation component 20. In some embodiments, the communication component 124 may communicatively couple the secondary device 96 to the industrial control system 22, other industrial automation components 20, edge computing devices 86, cloud computing devices 88, the computing devices 90, or the like via a communication network such as EtherNet/IP. ControlNet, DeviceNet, or any other industrial communication network protocol.

Generally, the processor 126 may execute software applications that may include programs that enable the secondary device 96 to capture image data (e.g., machine-readable indicia displayed on the display 34 of the industrial automation component 20) and receive device data (e.g., operational data, connection data, authentication data) associated with the industrial automation component 20. That is, the software applications may communicate with the industrial control system 22, cloud-based computing systems, industrial automation components 20, and the like and gather information associated with the industrial automation component 20 of the industrial automation system 10, other industrial automation components 20, users, and the like.

The memory 128 and the storage 130 may also be used to store the data, analysis of the data, the software applications, and the like. The memory 128 and the storage 130 may represent non-transitory computer-readable media (e.g., any suitable form of memory or storage) that may store the processor-executable code used by the processor 126 to perform various techniques described herein. The display 134 of the secondary device 96 may display image data, such as machine-readable indicia associated with the secondary device 96. In certain embodiments, the machine-readable indicia may include a device identifier and/or an operator identifier. The industrial automation component 20 may capture images including the machine-readable indicia and may analyze the images to determine the device identifier and/or the operator identifier. The industrial automation component 20 may compare the device identifier and/or the operator identifier with an access list that maps access levels to device identifiers and/or operator identifiers. As such, the industrial automation component 20 may determine a user access level based on the device identifier and/or the operator identifier. In certain embodiments, the secondary device 96 may periodically generate a new machine-readable indicia

The secondary device 96 may also include an image sensor 120, which may include any image acquisition circuitry such as a digital camera capable of acquiring digital images, digital videos, or the like. For example, the image sensor 120 may capture the image data 112 rendered on the display 34 of the industrial automation component 20. In certain embodiments, the image sensor 120 may transmit the image data 112 to the processor 26 and the processor 26 may analyze and/or process the image data 112 to facilitate retrieval of data and/or information associated with the industrial automation component 20. For example, the processor 26 may determine a website associated with the image data 112 and may access the website to retrieve the data. In some embodiments, the data may include the connection data 104, the operation data 106, the authentication data 108, and the like.

The secondary device 96 may also include a location sensor 122, which may include circuitry designed to determine a physical location of the secondary device 96. In one embodiment, the location sensor 122 may include a global positioning system (GPS) sensor that acquires GPS coordinates for the secondary device 96.

In certain embodiments, the secondary device 96 or the communication component 124 of the secondary device 96 may include an antenna to receive and/or transmit signals from and/or to other electronic devices (e.g., computing devices, industrial automation devices, control systems, and the like). For example, the antenna may receive the signal and may transmit the signal to the processor 26. The processor 26 may determine a command associated with the received signal. For example, a second device may generate and transmit a signal that may be received by the secondary device 96. The second device may generate a signal that includes operational data associated with the industrial automation component 20. The processor 26 may receive the signal and may perform an action (e.g., transmit the operational data, display the operational data, and the like) based on the received signal.

In some embodiments, the secondary device 96 may transmit signals (e.g., data) to the industrial automation component 20. As described above, the secondary device 96 may receive input data associated with installation and/or configuration of the industrial automation component 20 and may transmit signals based on the input data. Accordingly, the industrial automation component 20 may receive the signals and may render and/or generate additional machine-readable indicia based on the input data. In certain embodiments, the secondary device 96 may transmit a signal that includes data associated with the secondary device 96 and/or data associated with the captured image data 112 (e.g., a time the scan occurred). For example, the secondary device 96 may transmit the signal based on capturing and/or receiving the image data 112. As such, the industrial automation component 20 may receive the signal and may identify the secondary device 96, the operator, the scan time, and any other suitable information associated with capturing the image data 112 with the secondary device 96. The industrial automation component 20 may store the data in the memory 28 and/or the storage 30 and may utilize the stored data for generation and/or rendering of additional machine-readable indicia.

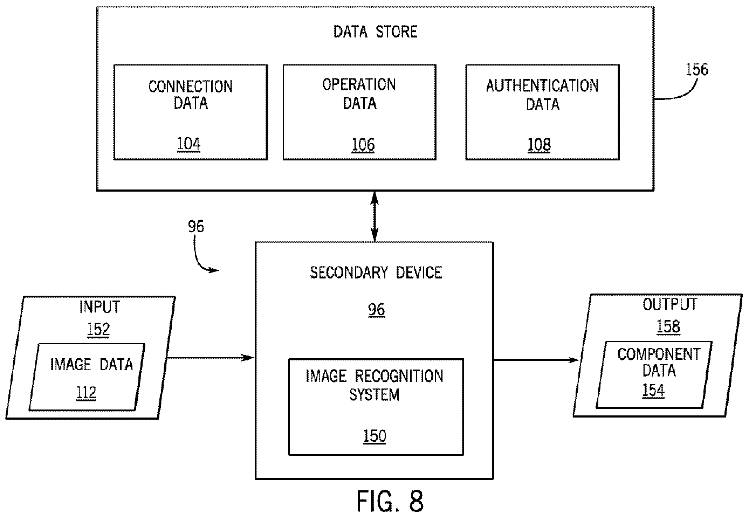

To elaborate further on the secondary device 96, FIG. 8 is a block diagram of the secondary device 96 incorporating an image recognition system 150. The image recognition system 150 may be a software application that may be stored in the memory 128 and/or storage 130. The image recognition system 150 may be executed by the processor 126 and may be utilized to generate machine-readable indicia on the display 134. In some embodiments, the image recognition system 150 may receive a set of inputs 152, such as image data 112. For example, the image sensor 120 may capture images of machine-readable indicia rendered on the electronic display 34 of the industrial automation component 20. The image sensor 120 may generate the image data 112 based on the captured images and may transmit the image data 112 to the processor 26. In certain embodiments, the image recognition system 150 may process the image data 112. For example, the image recognition system 150 may analyze the image data 112 to determine component data 154 (e.g., connection data 104, operation data 106, authentication data 108, and the like, which may be retrieved from a data store 156) associated with the industrial automation component 20, which may be included in an output 158 that may be displayed on the display 134 of the secondary device 96. Moreover, the image recognition system 150 may analyze the image data 112 to determine a website associated with the image data 112. As such, the secondary device 96 may generate a prompt on the display 134 based on the image data 112. In certain embodiments, the secondary device 96 may render one or more selectable elements on the display 134. The secondary device 96 may receive an input indicative of a selection of one of the selectable elements and may perform an action based on the input. For example, the secondary device 96 may generate a prompt to retrieve data associated with the industrial automation component 20.

In some embodiments, the secondary device 96 may render a visualization that includes information associated with the industrial automation component 20. For example, the visualization may include a device type, a model number, a serial number, an installation date, a warranty period, and the like. Additionally or alternatively, the visualization may include one or more selectable elements to retrieve additional data associated with the industrial automation component 20. In certain embodiments, the one or more selectable elements may include a first element that corresponds to retrieving the connection data 104 from the data store 156, which may be the data store 114. Additionally, the data store 156 may include (or be included in) the memory 28, the storage 30, or the database 80, be included in the edge computing devices 86, the cloud computing devices 88, the computing devices 90 (e.g., a memory or storage device included in (the edge computing devices 86, the cloud computing devices 88, or the computing devices 90), or any combination thereof. The one or more selectable elements may also include a second element that corresponds to retrieving the operation data 106 from the data store, a third element that corresponds to retrieving the authentication data 108 from the data store, a fourth element that corresponds to retrieving all data associated with the industrial automation component 20 from the data store, a fifth element that corresponds to declining to retrieve data associated with the industrial automation component 20, and any other suitable selectable clement.

In certain embodiments, the secondary device 96 may generate a prompt to input user data associated with the operator and/or the secondary device 96 based on the image data 112. For example, the secondary device 96 may receive an input to access a website associated with the image data 112. The secondary device 96 may attempt to access the website and may receive an instruction to prompt the operator to input a user ID and/or a password to facilitate accessing the website. The website may provide access to data associated with the industrial automation component 20 upon verification of the operator and/or the secondary device 96. Additionally or alternatively, the secondary device 96 may receive a set of tasks associated with the industrial automation component 20 based on the image data 112. For example, the secondary device 96 may receive and/or retrieve the set of tasks from the data store based on the image data 112. The secondary device 96 may render a set of instructions to perform one or more of the tasks and may transmit information indicative of completion of one or more of the tasks to the data store and/or the industrial automation component 20. For example, the secondary device 96 may display a set of instructions to configure the industrial automation component 20 during an installation process. Additionally or alternatively, the secondary device 96 may generate and/or transmit a report based on the device data.

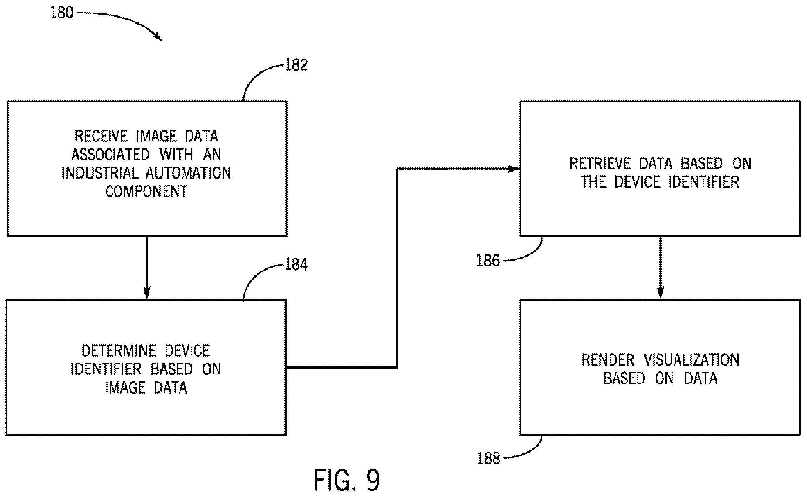

With the foregoing in mind, FIG. 9 is a flowchart of a method 180 for retrieving data associated with the industrial automation component 20 based on image data, in accordance with an embodiment of the present disclosure. Although the method 180 is described below as performed by the secondary device 96. it should be noted that the method 180 may be performed by any suitable computing device and/or processor. Moreover, although the following description of the method 180 is described in a particular order, it should be noted that the method 180 may be performed in any suitable order.

At process block 182. the secondary device 96 may receive image data (e.g., image data 112) associated with the industrial automation component 20. For example, the image sensor 120 may capture images of machine-readable indicia rendered on the display 34 of the industrial automation component 20. The image sensor 120 may process and/or transmit the image data 112 to the processor 26. At process block 184, the secondary device 96 may determine a device identifier based on the image data 112. In some embodiments, the secondary device 96 may determine a model number, a device type, a serial number, a vendor, and the like associated with the industrial automation component 20, which may be associated with the machine-readable indicia displayed by the industrial automation component 20. It should also be noted that, in sonic embodiments, multiple device identifiers may be identified at process block 184. For example, the machine-readable indicia displayed by the industrial automation component 20 may pertain to multiple components, such as components included in a single industrial automation device or the factory 12 or a portion of the factory 12 (e.g., within one or more cells 18 or areas 16).

At process block 186, the secondary device 96 may retrieve data based on the device identifier. In certain embodiments, the secondary device 96 may transmit a request based on the device identifier to another device, such as the database 80, the edge computing device 86, the cloud computing device 88. the computing devices 90, and the like. For example, any computing device of the cloud computing system (e.g.. edge computing device 86, cloud computing device 88, computing devices 90, and so forth) may store data associated with the industrial automation component 20, and the secondary device 96 may retrieve the data (or be permitted to obtain the data) based on the device identifier or using the device identifier. Additionally or alternatively, the image data 112 may include the data associated with the industrial automation component 20. As such, the secondary device 96 may process the image data 112 to retrieve an operational status, operational history, maintenance history, maintenance tasks, installation date, warranty information, model number, device type, software version, and the like.

At process block 188, the secondary device 96 may render a visualization based on the retrieved data. In some embodiments, the visualization may include the data associated with the industrial automation component 20. Additionally or alternatively, the visualization may include a set of tasks (e.g., maintenance tasks) that may be upcoming or overdue based on a maintenance record of the industrial automation component 20. In certain embodiments, the set of tasks may include selectable elements that cause the secondary device 96 to receive and/or retrieve a set of instructions to perform a selected task. For example, the secondary device 96 may receive an input to perform a software update. As such, the secondary device 96 may receive and/or retrieve the software update for the industrial automation component 20 and may transmit the software update to the industrial automation component 20. Additionally or alternatively, the secondary device 96 may transmit an instruction that causes the industrial automation component 20 to receive and/or retrieve the software update. The secondary device 96 may also transmit an instruction to adjust an operational status of the industrial automation component 20.

As such, the secondary device 96 may utilize image data (e.g., the image data 112) to receive and/or retrieve data associated with the industrial automation component 20. For example, the secondary device 96 may receive an identification of additional components connected to the industrial automation component 20. Accordingly, the image data 112 may facilitate access to additional data associated with the industrial automation component 20.

Additionally or alternatively, the secondary device 96 may perform an authentication process based on the image data 112. For example, the secondary device 96 may transmit a first device identifier associated with the industrial automation component 20, a second device identifier associated with the secondary device 96. a personnel identifier associated with the operator, or any combination thereof to a computing device of the cloud computing system. For example, the device identifier may include a serial number, a model number, a model name, a device type, a facility name associated with the device, or any other suitable information that facilitates identification of the device, or any combination thereof. In some embodiments, the device identifier may be a unique identifier associated with the industrial automation component 20. The computing device of the cloud computing system may receive the identifiers and may determine authorization and/or user access levels for the operator and/or the secondary device 96 based on the identifiers. For example, the cloud computing device 88 may determine whether the operator and/or the secondary device 96 are permitted to access and/or perform tasks (e.g., operational tasks, maintenance tasks, and the like) on the industrial automation component 20 based on the identifiers. The cloud computing device 88 may transmit the authorization and/or authentication of the operator and/or the secondary device 96. Additionally or alternatively, the cloud computing device 88 may transmit data associated with the industrial automation component 20 and/or a set of instructions to perform a task to the secondary device 96. Alternatively, the cloud computing device 88 may transmit a notification indicative of failure to authenticate and/or authorize the operator and/or the secondary device 96.

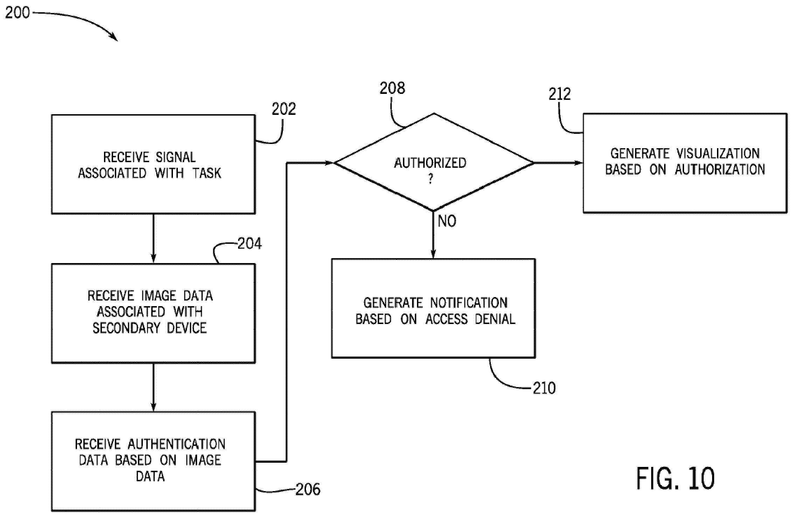

Continuing with the drawings, FIG. 10 is a flowchart of a method 200 for receiving user authentication data associated with the secondary device 96, in accordance with an embodiment of the present disclosure. Although the method 200 is described below as performed by the industrial automation component 20, it should be noted that the method 200 may be performed by any suitable computing device and/or processor. Moreover, although the following description of the method 200 is described in a particular order, it should be noted that the method 200 may be performed in any suitable order.

At process block 202, the industrial automation component 20 may receive a signal associated with a task. For example, the secondary device 96 may transmit a signal that requests access to the industrial automation component 20 to perform the task. The industrial automation component 20 may receive the request and may determine a threshold user access level associated with the task. For example, the industrial automation component 20 may determine the task includes replacing a part in the industrial automation component 20. In certain embodiments, the industrial automation component 20 may determine an expected lifetime associated with the part and may compare with the actual lifetime based on the operational history of the industrial automation component 20. The industrial automation component 20 may determine replacement of the part includes accessing and/or modifying computer code associated with the industrial automation component 20, such as a software update. As such, the industrial automation component 20 may determine the user access level may include computer code access.

Moreover, at process block 204, the industrial automation component 20 may receive image data associated with the secondary device 96. For example, an image sensor of the industrial automation component 20 may capture images rendered on an electronic display of the secondary device 96. The captured images may include image data indicative of machine-readable indicia rendered on the electronic display. In some embodiments, the machine-readable indicia may include authentication data that is embedded into the machine-readable indicia, such as a QR code.

At process block 206, the industrial automation component 20 may receive and/or retrieve authentication data based on the image data. The industrial automation component 20 may process the image data to retrieve the authentication data embedded in the machine-readable indicia. In some embodiments, the authentication data may include information associated with the operator and/or the secondary device 96. For example, the information may include a device type, a serial number, a model number, a skill level of the operator, a user ID, a password, and the like.

At decision block 208, the industrial automation component 20 may determine whether the operator and/or the secondary device 96 are authorized to access the industrial automation component and perform the task. For example, the industrial automation component 20 may compare the authentication data with a set of authentication criteria based on the task and/or the industrial automation component 20. In some embodiments, the industrial automation component 20 may retrieve and/or receive the authentication criteria based on the task. In some embodiments, the industrial automation component 20 may determine whether the authentication data satisfies any number of authentication criteria, such as a threshold number of authentication criteria, a single authentication criterion, or all authentication criteria.

If the authentication data fails to satisfy the authentication criteria (NO path of decision block 208), at process block 210, the industrial automation component 20 may generate a notification indicative of denying access to the industrial automation component 20 to perform the task. In certain embodiments, the industrial automation component may render the notification on the display 34 of the industrial automation component. The notification may include at least a portion of the authentication data and/or at least a portion of the authentication criteria. For example, the notification may include the failed authentication criteria. Additionally or alternatively, the industrial automation component may transmit the notification to the secondary device 96. As such, the industrial automation component 20 may cause the secondary device 96 to display the notification.

If the authentication data satisfies the authentication criteria (YES path of decision block 208), at process block 212, the industrial automation component 20 may generate a visualization based on the authorization. For example, the visualization may include a notification indicative of authorizing access to the industrial automation component 20. In certain embodiments, the visualization may include a prompt to begin the task and/or to retrieve a set of instructions to perform the task. Additionally or alternatively, the visualization may include an instruction associated with the task. Moreover, the visualization may include one or more selectable elements associated with the task and the industrial automation component 20 may receive an input selecting one of the selectable elements.

As such, the method 200 may use image data to validate and/or authorize secondary devices before granting access to data and operations for the industrial automation components 20. Accordingly, the method 200 may increase security for industrial automation components 20 by preventing access from unauthorized secondary devices.

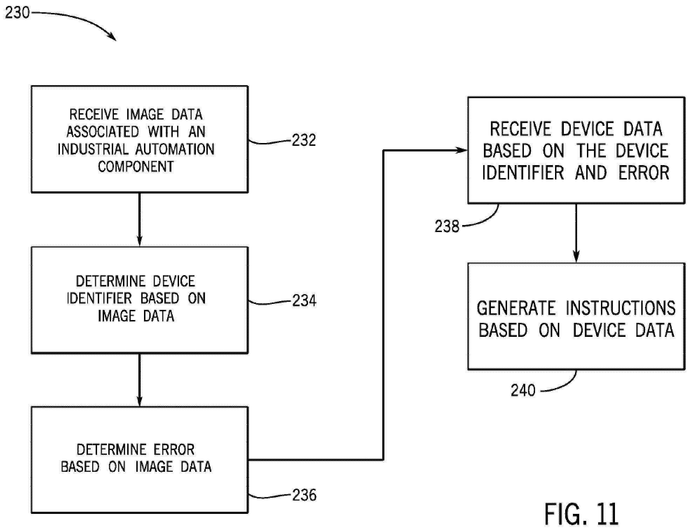

With the foregoing in mind. FIG. 11 illustrates a flowchart of a method 230 for generating task instructions for an industrial automation component 20 based on image data, in accordance with an embodiment of the present disclosure. Although the method 230 is described below as performed by the secondary device 96, it should be noted that the method 230 may be performed by any suitable computing device and/or processor that generates industrial automation component workflows. Moreover, although the following description of the method 230 is described in a particular order, it should be noted that the method 230 may be performed in any suitable order.

At process block 232, the secondary device 96 may receive image data associated with the industrial automation component 20. For example, the image sensor 120 may capture images of machine-readable indicia rendered on the display 34 of the industrial automation component 20. The image sensor 120 may process and/or transmit the image data to the processor 26. At process block 234, the secondary device 96 may determine a device identifier based on the image data. In some embodiments, the secondary device 96 may determine a model number, a device type, a serial number, a vendor, and the like associated with the industrial automation component 20.

At process block 236, the secondary device 96 may determine an error based on the image data. For example, the industrial automation component 20 may embed data associated with an error code into the machine-readable indicia. In some embodiments, the error code may include a corresponding faulty part, a portion of computer code, a connection, and any other suitable problem associated with the industrial automation component 20. The secondary device 96 may analyze the image data and retrieve the error code based on the analyzed image data.

At process block 238, the secondary device 96 may retrieve data based on the device identifier and the error code. In certain embodiments, the secondary device 96 may transmit a request based on the device identifier to another device, such as the database 80, the edge computing device 86, the cloud computing device 88, the computing devices 90, and the like. For example, the cloud computing device 88 may store data associated with the industrial automation component 20 and the secondary device 96 may retrieve the data based on the device identifier. In some embodiments, the data may include a set of instructions to troubleshoot and/or resolve the error code. Additionally or alternatively, the cloud computing device 88 may determine whether a replacement part is specified based on the error code. The cloud computing device 88 may determine whether the replacement part is in stock at the factory, an order status for the replacement part, and/or may generate a prompt to order the replacement part. For example, the cloud computing device 88 may transmit vendor information associated with the replacement part, such as a website to purchase the replacement part, a part number, and the like. Additionally or alternatively, the image data may include the data associated with the industrial automation component 20. As such, the secondary device 96 may process the image data to retrieve an operational status, operational history, maintenance history, maintenance tasks, installation date, warranty information, model number, device type, software version, and the like.

At process block 240, the secondary device 96 may generate instructions based on the data. For example, the instructions may include a set of tasks (e.g., maintenance tasks) based on the error code. Additionally or alternatively, the secondary device 96 may transmit an instruction that causes the industrial automation component 20 to receive and/or retrieve the set of tasks. The secondary device 96 may also transmit an instruction to adjust an operational status of the industrial automation component 20.

As such, the secondary device 96 may utilize image data to receive and/or retrieve data based on a fault or error associated with the industrial automation component. Accordingly, the image data may facilitate troubleshooting and/or resolving issue associated with the industrial automation component 20.

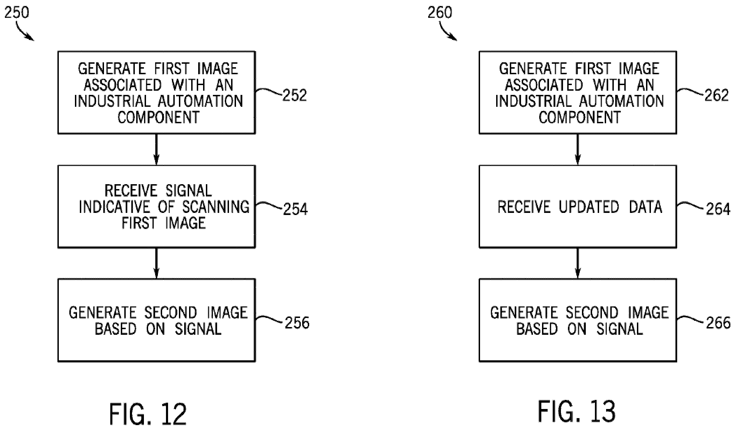

As mentioned above, industrial automation components may update graphical indicia, for instance, by changing from generating or displaying first machine-readable indicia to generating or displaying second machine-readable indicia. With this in mind. FIG. 12 illustrates a flowchart of a method 250 for generating image data for industrial automation component 20, in accordance with an embodiment of the present disclosure. Although the method 250 is described below as performed by the industrial automation component 20, it should be noted that the method 250 may be performed by any suitable computing device and/or processor that generates wiring instructions. Moreover, although the following description of the method 250 is described in a particular order, it should be noted that the method 250 may be performed in any suitable order.

At process block 252, the industrial automation component 20 may generate a first image based on data associated with the industrial automation component 20. For example, the first image may include a machine-readable indicia that includes embedded data, such as a model number, a serial number, a manufacturer, a list of part numbers, and the like. As such, the secondary device 96 may scan the first image to receive and/or retrieve the data. Additionally, the secondary device 96 may transmit a signal to the industrial automation component 20 in response to scanning the first image. The signal may provide an indication that the secondary device 96 scanned the first image. As such, the industrial automation component 20 may update the first image and/or generate a second image in response to receiving the signal. Additionally or alternatively, the secondary device 96 may retrieve data associated with the industrial automation component 20 from a secondary device, such as the database 80, the edge computing device 86, the cloud computing device 88, the computing devices 90, and the like. In certain embodiments, the secondary device may be communicatively coupled to the industrial automation component 20 and may transmit the signal indicative of the secondary device 96 scanning the first image.

At process block 254, the industrial automation component 20 may receive the signal indicative of scanning the first image. In some embodiments, the signal may include a device identifier associated with the secondary device 96. As such, the industrial automation component 20 may analyze the device identifier to identify the secondary device 96. For example, the industrial automation component 20 may compare the device identifier to a list of device identifiers stored in memory 28 and/or storage 30. The industrial automation component 20 may determine the secondary device 96 corresponds to a maintenance device and/or a maintenance operator. For example, the list of device identifiers may include a corresponding function and/or operator information associated with the devices. For example, the industrial automation component 20 may determine the secondary device 96 corresponds to a maintenance operator and/or the secondary device 96 corresponds to a diagnostic device.

At process block 256, the industrial automation component 20 may generate a second image based on the signal. In certain embodiments, the industrial automation component 20 may generate the second image based on a corresponding function of the secondary device 96 and/or a role (e.g., position, title, and so forth) associated with the operator. For example, the industrial automation component 20 may determine the secondary device 96 includes a diagnostic device. As such, the industrial automation component 20 may retrieve and/or receive additional data stored in the memory 28 and/or storage 30 relevant to the diagnostic device. For example, the industrial automation component 20 may retrieve operational data including operational parameters and operational history of the industrial automation component 20. The industrial automation component 20 may embed the operational data in a second machine-readable indicia included in the second image. Additionally or alternatively, the industrial automation component 20 may update the first image. For example, the industrial automation component 20 may update the first image to include the second machine-readable indicia and/or may update the first machine-readable indicia to embed the retrieved data into the first machine-readable indicia. Additionally or alternatively, the industrial automation component 20 may embed access credentials (e.g., user ID, password, and so forth) in machine-readable indicia to retrieve data associated with the industrial automation component 20. In certain embodiments, the industrial automation component 20 may verify and/or authenticate the secondary device 96 based on the received signal including a device identifier and the list of device identifiers stored in the memory 28 and/or the storage 30. In response to the device identifier matching a corresponding device identifier in the list, the industrial automation component 20 may update the first image and/or generate a second image including machine-readable indicia that includes the access credentials embedded therein. As such, the secondary device 96 may scan the machine-readable indicia and receive the access credentials. The secondary device 96 may then retrieve additional data associated with the industrial automation component 20. For example, the secondary device 96 may utilize the access credentials to retrieve and/or receive additional data from a secondary device, such as the database 80, the edge computing device 86, the cloud computing device 88, the computing devices 90, and the like. Additionally, the industrial automation component 20 may transmit a signal indicative of a location of the additional data and/or instructions to cause the secondary device 96 to access the additional data using the access credentials.

As such, the industrial automation component 20 may generate and/or update machine-readable indicia based on receiving signals indicative of scanning previous machine-readable indicia and information about the scanning device (e.g., the secondary device 96). Accordingly, the industrial automation component 20 may provide context specific information embedded within the machine-readable indicia to help an operator monitor the industrial automation component, troubleshoot issues, perform maintenance workflows, and the like. For example, the industrial automation component 20 may receive an indication of a maintenance device scanning the first image. As such, the industrial automation component 20 may retrieve and/or receive a maintenance history, performed maintenance workflows, a maintenance schedule, and the like from the memory 28 and/or the storage 30. Accordingly, the industrial automation component 20 may update the first image and/or generate a subsequent image to provide additional information associated with the industrial automation component based on a context (e.g., device function, operator function, operator role, and so forth).

Before continuing to discuss FIG. 13, it should be noted the method 250 may be performed by the secondary device 96. For example, the secondary device 96 may generate (and display) first image data, such as a first machine-readable indicia, that may be scanned by the industrial automation component 20. The image data may be indicative of a level of authorization associated with a user of the secondary device 96 or provide data (e.g., name, job title, organizational affiliation, or security information) that the industrial automation component 20 (or a device communicatively coupled to the industrial automation component 20) may use to determine whether the user of the secondary device 96 has authorization, a level of authorization, or an amount of time the user has authorization (e.g., to access the industrial automation component 20 or data associated with the industrial automation component 20 or a device communicatively coupled thereto). The secondary device 96 may receive data from the industrial automation component 20 in response to the industrial automation component 20 having scanned the first image. For instance, the data may be image data or data that the secondary device 96 may use to generate second image data. For example, based on the received data, the secondary device 96 may generate and display second image data (e.g., second machine-readable indicia) that, when scanned by another industrial automation device (e.g., in the same factory 12, area 16, or cell 18 as the industrial automation component 20). enables the other industrial automation component to determine that the user of the secondary device 96 has access to the other industrial automation component in a different, potentially less data or bandwidth intensive manner than the industrial automation component 20. For example, the industrial automation component 20 may determine the user is authorized by sending data to the cloud computing device 88 or the edge computing device 86. However, the second image data may be, for example, factory, area, cell (or other device)-specific such that the other industrial automation device may determine that the user of the secondary device 96 without forwarding data to the edge computing device 86 or cloud computing device 88 (or waiting to receive a response from such devices). The second image data may also be time-based (e.g., time-limited), meaning the second image data may only be accepted by industrial automation components for a limited amount of time.

With the foregoing in mind, FIG. 13 illustrates a flowchart of a method 260 for generating image data for industrial automation component 20, in accordance with an embodiment of the present disclosure. Although the method 260 is described below as performed by the industrial automation component 20, it should be noted that the method 260 may be performed by any suitable computing device and/or processor. Moreover, although the following description of the method 260 is described in a particular order, it should be noted that the method 260 may be performed in any suitable order.

At process block 262, the industrial automation component 20 may generate a first image based on data associated with the industrial automation component 20. For example, the first image may include a machine-readable indicia that includes embedded data, such as a model number, a serial number, a manufacturer, a list of part numbers, and the like. In certain embodiments, the first image may include a machine-readable indicia that includes embedded data, such as operational data, connection data, authentication data, and the like. For example, the authentication data may include a list of device identifiers that correspond to authorized devices permitted to control operations and/or access data associated with the industrial automation component 20. As another example, the connection data may include a list of industrial automation components and/or control systems communicatively and/or electrically coupled to the industrial automation component 20. Additionally or alternatively, the connection data may include communication protocols associated with the industrial automation component 20, communication protocols utilized by the industrial automation component 20 to communicate with one or more connected devices (e.g., other industrial automation components 20, industrial control system 22, and the like), communication ports (e.g., I/O ports 32), any other suitable connection data, and so forth.

Additionally or alternatively, the industrial automation component 20 may retrieve and/or receive (process block 264) updated data associated with the industrial automation component 20. In certain embodiments, the industrial automation component 20 may receive updated data from a secondary device, such as the database 80, the edge computing device 86, the cloud computing device 88, the computing devices 90. and the like. In certain embodiments, the secondary device may be communicatively coupled to the industrial automation component 20 and may transmit the updated data to the industrial automation component 20.

Additionally or alternatively, the processor 26 may receive updated connection data, such as a list of device connections, a list of active communication ports, and so forth. from the communication component 24 and/or the I/O ports 32. For example, a new device (e.g., another industrial automation component 20, industrial control system 22, and the like) may be communicatively coupled to one of the I/O ports 32. The communication component 24 and/or the processor 26 may receive a signal indicative of the connection and may perform a handshake process to establish a communication link with the new device. In certain embodiments, the communication component 24 and/or the processor 26 may transmit acceptable and/or available communication protocols to the new device via the I/O ports 32. The communication component 24 and/or the processor 26 may also receive and/or retrieve corresponding acceptable and/or available communication protocols associated with the new device. Accordingly, the communication component 24 and/or the processor 26 may select one or more communication protocols utilized by the industrial automation component 20 and the new device to perform subsequent communications. The processor 26 may store the connection data including the available and/or acceptable communication protocols, the selected communication protocol, and the like in the memory 28 and/or the storage 30. In certain embodiments, the industrial automation component 20 may receive updated connection data from the secondary device. For example, the secondary device may transmit a list of devices communicatively coupled to the industrial automation component 20 via a wired or wireless network, such as an industrial automation network.

The secondary device may transmit updated authentication data that includes an updated list of device identifiers that correspond to authorized devices permitted to control operations and/or access data associated with the industrial automation component. Additionally or alternatively, the authentication data may include updated access credentials. In certain embodiments, the updated authentication data may include any number of device identifiers to add to the list of device identifiers and/or any number of device identifiers to remove from the list of device identifiers. Additionally or alternatively, the updated authentication data may include any number of access credentials that may be utilized to access data associated with the industrial automation component 20. As such, the industrial automation component 20 may be provided with up-to-date authentication data to enhance security for the industrial automation component 20 and/or the factory 12 by preventing unauthorized access.

At process block 266, the industrial automation component 20 may generate a second image based on the updated data. For example, the industrial automation component 20 may receive a signal indicative of the updated data. In certain embodiments, the industrial automation component 20 may generate the second image based on updated connection data, updated authentication data, updated operational data, and the like. For example, the industrial automation component 20 may determine any number of new devices are communicatively coupled to the industrial automation component 20. As such, the industrial automation component 20 may store updated connection data in the memory 28 and/or the storage 30. The industrial automation component 20 may embed the updated data in a second machine-readable indicia included in the second image. Additionally or alternatively, the industrial automation component 20 may update the first image. For example, the industrial automation component 20 may update the first image to include the second machine-readable indicia and/or may update the first machine-readable indicia to embed the updated data into the first machine-readable indicia. Additionally or alternatively, the industrial automation component 20 may embed updated connection data (e.g., access credentials) in the machine-readable indicia. In response to receiving the updated data, the industrial automation component 20 may update the first image and/or generate a second image including machine-readable indicia that includes the updated access credentials embedded therein. As such, the secondary device 96 may scan the machine-readable indicia and receive the updated access credentials. The secondary device 96 may then retrieve data associated with the industrial automation component 20. For example, the secondary device 96 may utilize the updated access credentials to retrieve and/or receive additional data from a secondary device, such as the database 80. the edge computing device 86, the cloud computing device 88. the computing devices 90, and the like. Additionally, the industrial automation component 20 may transmit a signal indicative of a location of the data and/or instructions to cause the secondary device 96 to access the data using the updated access credentials.

As such, the industrial automation component 20 may generate and/or update machine-readable indicia based on receiving updated data. Accordingly, the industrial automation component 20 may provide real-time and up-to-date information embedded within the machine-readable indicia to help an operator monitor the industrial automation component, troubleshoot issues, perform maintenance workflows, and the like.

Technical effects of the present disclosure include generating and/or updating machine-readable indicia on an electronic display of an industrial automation device. For instance, the machine-readable indicia may facilitate a secondary device to access information and/or data associated with the industrial automation device. In this way, the information and/or the data may be easier to access and utilize.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

While only certain features of the disclosure have been illustrated and described herein, many modifications and changes will occur to those skilled in the art. It is, therefore, to be understood that the appended claims are intended to cover all such modifications and changes as fall within the true spirit of the disclosure.

**The** following is a list of further embodiments of the invention:
Embodiment 1. An industrial automation component, comprising:
   an electronic display configured to present image data; and
   a processor communicatively coupled to the electronic display, wherein the processor is configured to:
      receive image data associated with a secondary device;
      determine a device identifier associated with the secondary device based on the image data;
      identify authentication data based on a comparison between the device identifier and a stored list of device identifiers, wherein the authentication data comprises access credentials associated with the industrial automation component;
      generate first image data based on the authentication data; and
      present the first image data via the electronic display, wherein the first image data comprises a first machine-readable indicia.
Embodiment 2. The industrial automation component of embodiment 1, wherein the processor is configured to:
   in response to the comparison being indicative of the device identifier not being present in the list of device identifiers, generate a notification comprising an error code; and
   transmit the notification to the secondary device.
Embodiment 3. The industrial automation component of embodiment 2, wherein the notification causes the secondary device to display information associated with the industrial automation component based on the error code.
Embodiment 4. The industrial automation component of embodiment 2, wherein the notification causes the secondary device to receive, from a network external to an industrial automation system, data associated with the industrial automation component based on the error code.
Embodiment 5. The industrial automation component of embodiment 1, wherein the first machine-readable indicia comprises a Quick Response (QR) code, a barcode, or a combination thereof.
Embodiment 6. A method, comprising:
   receiving connection data associated with an industrial automation component, wherein the connection data comprises a list of devices coupled to the industrial automation component;
   generating first image data based on the connection data, wherein the first image data comprises a first machine-readable indicia having the connection data embedded therein;
   receiving updated connection data, wherein the updated connection data comprises an updated list of devices coupled to the industrial automation component, wherein the updated list of devices comprises at least one additional device coupled to the industrial automation component, at least one device disconnected from the industrial automation component, or a combination thereof;
   generating second image data based on the updated connection data, wherein the second image data comprises a second machine-readable indicia having the updated connection data embedded therein; and
   displaying the second image data via an electronic display of the industrial automation component.
Embodiment 7. The method of embodiment 6, wherein receiving the updated connection data comprises:
   receiving an indication of the at least one additional device being coupled to the industrial automation component;
   establishing a connection between the at least one additional device and the industrial automation component based on a communication protocol; and
   storing a device identifier associated with the at least one additional device and the communication protocol.
Embodiment 8. The method of embodiment 7, wherein the updated connection data comprises the communication protocol, the device identifier, or a combination thereof.
Embodiment 9. The method of embodiment 6, comprising:
   receiving authentication data associated with the industrial automation component, wherein the authentication data comprises a list of device identifiers permitted to access data associated with the industrial automation component;
   receiving a device identifier associated with a secondary device;
   based on the device identifier matching at least one device identifier in the list of device identifiers, generating third image data, wherein the third image data comprises a third machine-readable indicia having access credentials embedded therein; and
   displaying the third image data via the electronic display of the industrial automation component.
Embodiment 10. The method of embodiment 9, wherein the access credentials permit the secondary device to access additional data associated with the industrial automation component via an external network.
Embodiment 11. The method of embodiment 9, wherein generating the third image data comprises updating the first image data to include the third machine-readable indicia.
Embodiment 12. The method of embodiment 6, wherein generating the second image data comprises updating the first image data to include the second machine-readable indicia.
Embodiment 13. The method of embodiment 6, comprising:
   receiving a signal indicative of a secondary device scanning the first machine-readable indicia; and
   in response to receiving the signal, generating fourth image data, wherein the fourth image data comprises a fourth machine-readable indicia.
Embodiment 14. An industrial automation component, comprising:
   an electronic display configured to display machine-readable indicia, wherein the machine-readable indicia is configured to be scanned by an image sensor; and
   a processor communicatively coupled to the electronic display, wherein the processor is configured to:
      receive data associated with the industrial automation component;
      generate a first machine-readable indicia based on the data, wherein the first machine-readable indicia is configured to be displayed via the electronic display;
      receive updated data associated with the industrial automation component; and
      generate a second machine-readable indicia based on the updated data, wherein the second machine-readable indicia is configured to be displayed via the electronic display.
Embodiment 15. The industrial automation component of embodiment 14, wherein the processor is configured to receive the updated data via an external network.
Embodiment 16. The industrial automation component of embodiment 14, comprising a second image sensor configured to capture image data, wherein the image data comprises the updated data.
Embodiment 17. The industrial automation component of embodiment 16, wherein the processor is configured to receive the image data from the second image sensor.
Embodiment 18. The industrial automation component of embodiment 17, wherein the processor is configured to:
   process a third machine-readable indicia associated with the image data; and
   receive the updated data based on the third machine-readable indicia.
Embodiment 19. The industrial automation component of embodiment 14, wherein the processor is configured to:
   receive a signal from a secondary device; and
   generate a fourth machine-readable indicia on the electronic display based on the signal.
Embodiment 20. The industrial automation component of embodiment 14, wherein the second machine-readable indicia comprises a Quick Response (QR) code and wherein the updated data is embedded into the QR code.

## Claims

1. An industrial automation component, comprising:
an electronic display configured to present image data; and
a processor communicatively coupled to the electronic display, wherein the processor is configured to:
receive image data associated with a secondary device;
determine a device identifier associated with the secondary device based on the image data;
identify authentication data based on a comparison between the device identifier and a stored list of device identifiers, wherein the authentication data comprises access credentials associated with the industrial automation component;
generate first image data based on the authentication data; and
present the first image data via the electronic display, wherein the first image data comprises a first machine-readable indicia.

2. The industrial automation component of claim 1, wherein the processor is configured to:
in response to the comparison being indicative of the device identifier not being present in the list of device identifiers, generate a notification comprising an error code; and
transmit the notification to the secondary device.

3. The industrial automation component of claim 2, wherein the notification causes the secondary device to display information associated with the industrial automation component based on the error code; or
wherein the notification causes the secondary device to receive, from a network external to an industrial automation system, data associated with the industrial automation component based on the error code.

4. The industrial automation component of one of claims 1 to 3, wherein the first machine-readable indicia comprises a Quick Response (QR) code, a barcode, or a combination thereof.

5. A method, comprising:
receiving connection data associated with an industrial automation component, wherein the connection data comprises a list of devices coupled to the industrial automation component;
generating first image data based on the connection data, wherein the first image data comprises a first machine-readable indicia having the connection data embedded therein;
receiving updated connection data, wherein the updated connection data comprises an updated list of devices coupled to the industrial automation component, wherein the updated list of devices comprises at least one additional device coupled to the industrial automation component, at least one device disconnected from the industrial automation component, or a combination thereof;
generating second image data based on the updated connection data, wherein the second image data comprises a second machine-readable indicia having the updated connection data embedded therein; and
displaying the second image data via an electronic display of the industrial automation component.

6. The method of claim 5, wherein receiving the updated connection data comprises:
receiving an indication of the at least one additional device being coupled to the industrial automation component;
establishing a connection between the at least one additional device and the industrial automation component based on a communication protocol; and
storing a device identifier associated with the at least one additional device and the communication protocol.

7. The method of claim 6, wherein the updated connection data comprises the communication protocol, the device identifier, or a combination thereof.

8. The method of one of claims 5 to 7, comprising:
receiving authentication data associated with the industrial automation component, wherein the authentication data comprises a list of device identifiers permitted to access data associated with the industrial automation component;
receiving a device identifier associated with a secondary device;
based on the device identifier matching at least one device identifier in the list of device identifiers, generating third image data, wherein the third image data comprises a third machine-readable indicia having access credentials embedded therein; and
displaying the third image data via the electronic display of the industrial automation component.

9. The method of claim 8, wherein the access credentials permit the secondary device to access additional data associated with the industrial automation component via an external network; or
wherein generating the third image data comprises updating the first image data to include the third machine-readable indicia.

10. The method of one of claims 5 to 9, wherein generating the second image data comprises updating the first image data to include the second machine-readable indicia.

11. The method of one of claims 5 to 10, comprising:
receiving a signal indicative of a secondary device scanning the first machine-readable indicia; and
in response to receiving the signal, generating fourth image data, wherein the fourth image data comprises a fourth machine-readable indicia.

12. An industrial automation component, comprising:
an electronic display configured to display machine-readable indicia, wherein the machine-readable indicia is configured to be scanned by an image sensor; and
a processor communicatively coupled to the electronic display, wherein the processor is configured to:
receive data associated with the industrial automation component;
generate a first machine-readable indicia based on the data, wherein the first machine-readable indicia is configured to be displayed via the electronic display;
receive updated data associated with the industrial automation component; and
generate a second machine-readable indicia based on the updated data, wherein the second machine-readable indicia is configured to be displayed via the electronic display.

13. The industrial automation component of claim 12, wherein the processor is configured to receive the updated data via an external network.

14. The industrial automation component of claim 12, comprising a second image sensor configured to capture image data, wherein the image data comprises the updated data; and/or
wherein the processor is configured to receive the image data from the second image sensor; and/or
wherein the processor is configured to:
process a third machine-readable indicia associated with the image data; and
receive the updated data based on the third machine-readable indicia.

15. The industrial automation component of claim 12, wherein the processor is configured to:
receive a signal from a secondary device; and
generate a fourth machine-readable indicia on the electronic display based on the signal;
or
wherein the second machine-readable indicia comprises a Quick Response (QR) code and
wherein the updated data is embedded into the QR code.
